# EUROPÄISCHE PATENTSCHRIFT

(11) **EP 2 006 156 B1**
(45) Veröffentlichungstag und Bekanntmachung des Hinweises auf die Patenterteilung: **30.11.2011**
(21) Anmeldenummer: 08003423.4
(22) Anmeldetag: 26.02.2008
(51) Int. Cl.: B60R 1/04

(54) **Befestigungseinrichtung für einen Innenrückblickspiegel von Kraftfahrzeugen an einer Innenseite einer Windschutzscheibe**
Mounting device for an interior rear view mirror for motor vehicles on the inside of a windscreen
Dispositif de fixation pour le rétroviseur intérieur de véhicules automobiles sur la face intérieure d'un pare-brise

(30) Priorität: 20.06.2007 DE 102007028162
(43) Veröffentlichungstag der Anmeldung: 24.12.2008
(73) Patentinhaber: Dr. Ing. h.c. F. Porsche AG, 70435 Stuttgart (DE)
(72) Erfinder: Müller, Marcus, 75173 Pforzheim (DE)

(56) Entgegenhaltungen:
- WO-A-93/16900
- US-A- 5 820 097
- US-B1- 6 447 127

## Beschreibung

Die Erfindung betrifft eine Befestigungseinrichtung für einen Innenrückblickspiegel von Kraftfahrzeugen an der Innenseite einer Windschutzscheibe, wobei an der Windschutzscheibe ein durch Kleben in Lage gehaltenes Aufnahmeteil vorgesehen ist, an dem ein Spiegelfuß des Innenrückblickspiegels lösbar befestigt ist.

Aus der DE-0S 20 15 608 geht eine Befestigungseinrichtung für einen Innenrückblickspiegel von Kraftfahrzeugen hervor, wobei ein aus Kunststoff gefertigtes plattenförmiges Aufnahmeteil mit rechteckförmigen Umriss an der Innenseite einer Windschutzscheibe durch Kleben befestigt ist. An zwei beabstandet angeordneten, parallel zueinander ausgerichteten Seitenkanten des Aufnahmeteils sind hinterschnittene V-förmige Aufnahmenuten vorgesehen, in die korrespondierend ausgebildete Steckkanten des Spiegelfußes einschiebbar sind.

Um das Aufschieben des Spiegelfußes auf das Aufnahmeteil zu gewährleisten und Toleranzen zwischen beiden Bauteilen zu kompensieren, sind die Seitenkanten der V-förmigen Aufnahmenuten verhältnismäßig dünn gehalten, so dass sie bei der Montage des Spiegelfußes elastisch auffedern können.

Aufgrund der bereichsweise elastischen Ausbildung des Aufnahmeteiles weist diese Befestigungseinrichtung im Verbindungsbereich Aufnahmeteil/Spiegelfuß eine relativ geringe Steifigkeit auf, wodurch im dynamischen Fahrbetrieb des Fahrzeuges störende Spiegelglasvibrationen auftreten können. Zudem ist diese Befestigungseinrichtung statisch überbestimmt.

Die WO 93/16900 A offenbart eine Befestigungseinrichtung für einen Innenrückblickspiegel von Kraftfahrzeugen an der Innenseite einer Windschutzscheibe, wobei an der Windschutzscheibe ein durch Kleben in Lage gehaltenes Aufnahmeteil vorgesehen ist, an dem ein Spiegelfuß des Innenrückblickspiegels lösbar befestigt ist. Der Spiegelfuß ist in seiner montierten Betriebsstellung lediglich über eine Sechspunkt-Auflage unmittelbar am Aufnahmeteil abgestützt und mittels einer separaten Halteeinrichtung am Aufnahmeteil befestigt. Zur Bildung der Sechspunkt-Auflage sind an der Oberseite des Spiegelfußes sechs beabstandet angeordnete, nach oben vorstehende Kopfabstützglieder mit endseitigen Anlageflächen vorgesehen, die sich bei montiertem Spiegelfuß an der eben ausgebildeten unteren Fläche des Aufnahmeteiles abstützen.

Da sämtliche Anlageflächen des Spiegelfußes räumlich gleich gerichtet sind und theoretisch in derselben Höhe verlaufen, liegt bei dieser Anordnung eine statisch überbestimmte Lagerung zwischen Spiegelfuß und Aufnahmeteil vor, die keine Querkräfte aufnehmen kann und bei der in der Praxis aufgrund der Fertigungstoleranzen des Spiegelfußes nur die drei höchsten Auflagepunkte von allen sechs Auflagepunkten tragen.

Aufgabe der Erfindung ist es, eine Befestigungseinrichtung für einen Innenrückblickspiegel von Kraftfahrzeugen an der Innenseite einer Windschutzscheibe so weiterzubilden, dass die Verbindung zwischen Aufnahmeteil und Spiegelfuß statisch exakt definiert ist und eine hohe Steifigkeit aufweist, so dass das Spiegelglasvibrationsverhalten im Fahrbetrieb deutlich verbessert wird.

Gelöst wird diese Aufgabe durch die Merkmale des Anspruchs 1. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Sechspunkt-Auflage zwischen Aufnahmeteil und Spiegelfuß eine statisch exakt definierte und eine hohe Steifigkeit aufweisende Verbindung geschaffen wird, mittels der geringe Spiegelglasvibrationen im dynamischen Fahrbetrieb sichergestellt sind. Durch eine bajonettartig ausgebildete Halteeinrichtung wird eine einfache und schnelle Montage des Innenrückblickspiegels am Aufnahmeteil geschaffen. Aufgrund der selbstzentrierenden Verbindung ist keine Fehlmontage des Spiegelfußes möglich. Durch die Spielfreiheit der Verbindung kann sich der Spiegelfuß beim Verstellen des Spiegelkopfes nicht verdrehen.

Ein Ausführungsbeispiel der Erfindung ist in der Zeichnung dargestellt und wird im Folgenden näher erläutert. Es zeigen
- Fig. 1: eine perspektivische Schrägansicht von hinten oben auf einen Innenrückblickspiegel eines Kraftfahrzeuges
- Fig. 2: einen Schnitt nach der Linie II-II der Fig. 1 in größerer Darstellung und gedreht

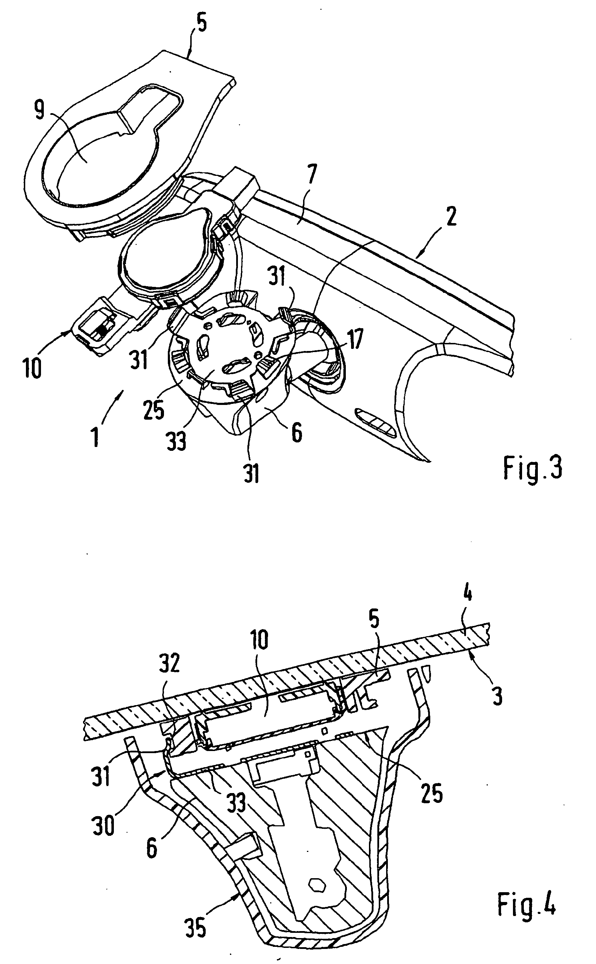

- Fig. 3: eine Explosionsdarstellung des Innenrückblickspiegels, eines Sensorelementes und eines Aufnahmeteiles
- Fig. 4: einen Schnitt nach der Linie IV-IV der Fig. 1
- Fig. 5: eine perspektivische Schrägansicht ähnlich Fig. 1, wobei der Spiegelfuß und das am Spiegelfuß befestigte Halteelement dargestellt sind
- Fig. 6: eine perspektivische Ansicht von unten auf das an der Windschutzscheibe befestigte Aufnahmeteil

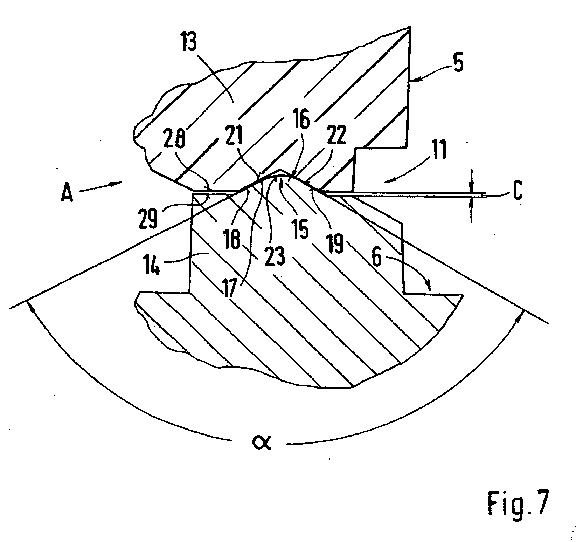

- Fig. 7: eine Einzelheit X der Fig. 2 in größerer Darstellung

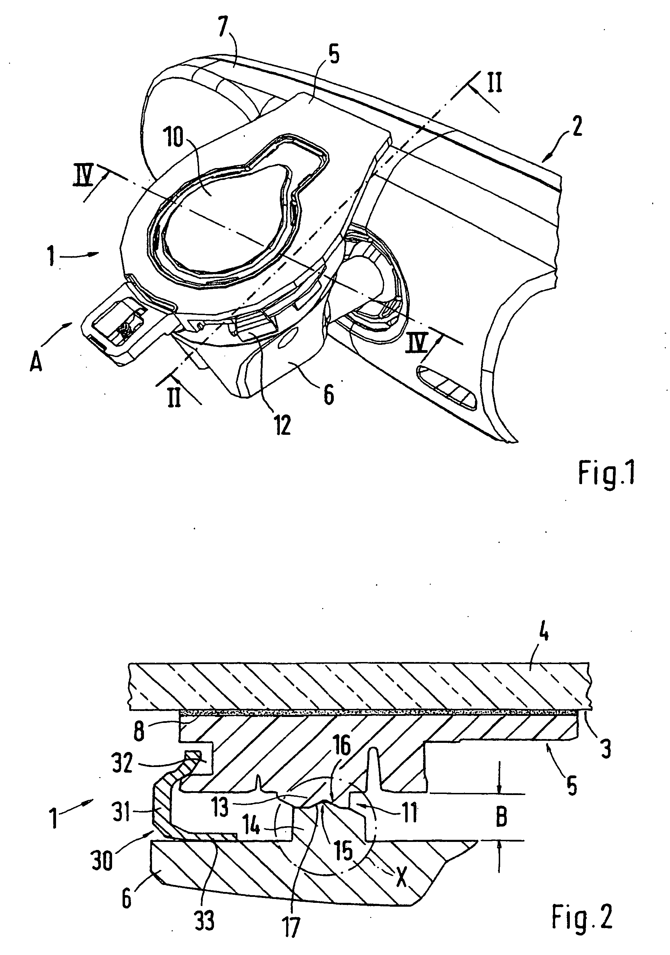

In den Fig. 1 und 2 ist eine Befestigungseinrichtung 1 für einen Innenrückblickspiegel 2 von Kraftfahrzeugen gezeigt, wobei der Innenrückblickspiegel 2 an der Innenseite 3 einer Windschutzscheibe 4 unter Zwischenschaltung eines Aufnahmeteiles 5 befestigt ist. Der Innenrückblickspiegel 2 setzt sich aus einen Spiegelfuß 6 und einem gelenkig mit diesem verbundenen Spiegelkopf 7 zusammen. Das eine geringe Bauhöhe aufweisende Aufnahmeteil 5 ist durch Kleben an der Innenseite 3 der Windschutzscheibe 4 befestigt und ist im Ausführungsbeispiel aus einem faserverstärkten Kunststoff gefertigt. Es könnte jedoch auch aus einem Sintermetall hergestellt sein.

Eine obere ebene Fläche 8 des Aufnahmeteiles 5 ist über eine Klebstoffschicht oder eine Klebefolie mit der Innenseite 3 der Windschutzscheibe 4 verbunden. Das Aufnahmeteil 5 dient zur Halterung und Abstützung des Innenrückblickspiegels 2. Im Ausführungsbeispiel weist das bereichsweise ringförmig ausgebildete Aufnahmeteil 5 eine mittige Aussparung 9 auf. In diese Aussparung 9 wird ein Sensorelement 10 eingesetzt, das bei montiertem Innenrückblickspiegel 2 durch eine nicht näher dargestellte Anpressfeder mit Vorspannung gegen die Innenseite 3 der Windschutzscheibe 4 gedrückt wird. Das Sensorelement 10 kann einen oder mehrere Sensoren beinhalten. Im Ausführungsbeispiel weist das Sensorelement 10 einen Regensensor, einen Lichtsensor und einen Feuchtesensor auf.

Die Form der Aussparung 9 ist der Außenkontur des Sensorelementes 10 angepasst, so dass dieses in der Aussparung 9 des Aufnahmeteils 5 lagerichtig und verschiebesicher positioniert ist.

Erfindungsgemäß ist der Spiegelfuß 6 in seiner montierten Betriebstellung A lediglich über eine Sechspunkt-Auflage 11 unmittelbar am Aufnahmeteil 5 abgestützt und mittels einer separaten Halteeinrichtung 12 am Aufnahmeteil 5 befestigt. Zur Bildung der Sechspunkt-Auflage 11 sind am Aufnahmeteil 5 und am Spiegelfuß 6 jeweils drei versetzt zueinander angeordnete, vorstehend ausgebildete Auflageelemente 13, 14 vorgesehen. An den Auflageelementen 13, 14 des Spiegelfußes 6 oder des Aufnahmeteiles 5 sind jeweils vorstehende Prismenführungen 15 ausgebildet, die mit korrespondierend profilierten, vertieft angeordneten Aufnahmenuten 16 des jeweils anderen Teiles formschlüssig zusammenwirken.

Im Ausführungsbeispiel weisen die Prismenführungen 15 die Form eines Dreikantprismas 17 auf. Die beiden vorstehenden Seitenflächen 18, 19 jedes Dreikantprismas 17, die sich von einem gemeinsamen theoretischen Eckpunkt 20 schräg nach unten hin erstrecken, bilden zwei unter einem Winkel α zueinander verlaufende Auflageflächen des Auflageelementes 13, 14 der Sechspunkt-Auflage 11.

Die Seitenflächen 18, 19 der Prismenführungen 15 verlaufen unter einem Winkel α zueinander, wobei der Winkel α vorzugsweise zwischen 60 und 120° beträgt. Die beiden Seitenflächen 18, 19 sind etwa gleich lang.

Im Ausführungsbeispiel sind die vorstehenden Prismenführungen 15 an den Auflageelementen 14 des Spiegelfußes 6 vorgesehen, wogegen die vertieft angeordneten Aufnahmenuten 16 an den Auflageelementen 13 des Aufnahmeteils 5 ausgebildet sind. Die Anordnung der Prismenführungen 15 und der Aufnahmenuten 16 kann jedoch auch umgekehrt erfolgen. Die korrespondierend ausgebildeten vertieft angeordneten Seitenflächen 21, 22 der Aufnahmenuten 16 bilden ebenfalls zwei schräg zueinander verlaufende Auflageflächen eines Auflageelementes 13, 14 der Sechspunkt-Auflage 11. Die beiden Seitenflächen 18, 19 der Prismenführungen 15 sind über einen radienförmigen Übergangsbereich 23 miteinander verbunden, wobei der Radius dieses Übergangsbereiches 23 größer ist als der relativ kleine Radius zwischen den beiden Seitenflächen 21, 22 der Aufnahmenuten 16.

Im Ausführungsbeispiel liegt der Spiegelfuß 6 an jedem seiner drei Auflageelemente 14 mit der schrägverlaufenden Seitenfläche 18 bereichsweise an der gleichgerichteten Seitenfläche 21 des Auflageelementes 13 auf, wogegen sich die winkelig zur Seitenfläche 18 verlaufende Seitenfläche 19 des Auflageelementes 14 an der gleichgerichteten Seitenfläche 22 des am Aufnahmeteil 5 angeordneten Auflageelementes 13 abstützt. Zwischen den drei jeweils paarweise angeordneten Auflageelementen 13, 14 verläuft das Aufnahmeteil 5 mit axialem Abstand (Maß B) zum Spiegelfuß 6.

Die drei jeweils einstückig mit dem Aufnahmeteil 5 bzw. dem Spiegelfuß 6 ausgebildeten Auflageelemente 13, 14 sind sternförmig zu einem theoretischen Mittelpunkt angeordnet und sind jeweils um 90° bis 135°, vorzugsweise um ca. 120° versetzt zueinander. Die Auflageelemente 13 des Aufnahmeteiles 5 sind an der der Windschutzscheibe 4 abgekehrten Seite eines bereichsweise ringförmig ausgebildeten Kragens 24 des Aufnahmeteils 5 einstückig angeformt. Die Auflageteile 14 des vorzugsweise aus einer Aluminiumlegierung oder aus Kunststoff gefertigten Spiegelfußes 6 sind an der dem Aufnahmeteil 5 zugekehrten Stirnseite 25 des Spiegelfußes 6 einstückig angeformt. An den Auflageteilen 13, 14 des Aufnahmeteils 5 und des Spiegelfußes 6 sind den Prismenführungen 15 bzw. den Aufnahmennuten 16 vorgelagert jeweils Einführschrägen 26, 27 ausgebildet, wobei die Einführschräge 26 der Prismenführung 15 und die Einführschräge 27 der Aufnahmenut 16 zugeordnet ist. Die einander zugerichteten Stirnseiten 28, 29 von jeweils zwei korrespondierenden Auflageelementen 13, 14 verlaufen mit geringem axialen Abstand (Maß C), so dass das Aufnahmeteil 5 und der Spiegelfuß 6 lediglich an sechs schrägverlaufenden Anlageflächen örtlich aufeinander aufliegen bzw. sich abstützen.

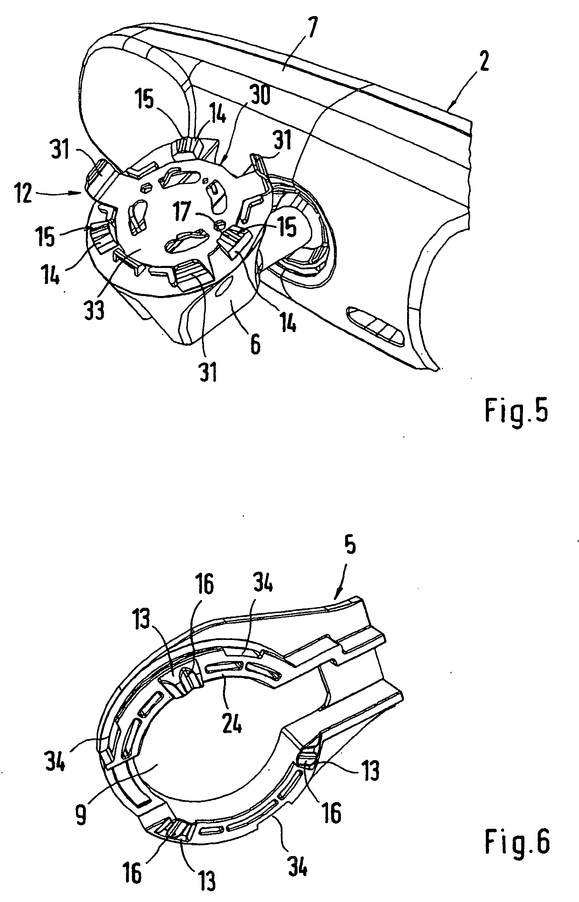

Die Halteeinrichtung 12 für den Spiegelfuß 6 umfasst ein mit dem Spiegelfuß 6 verbundenes Halteelement 30, das zumindest zwei in Richtung Aufnahmeteil 5 abgestellte federnde Haltezungen 31 aufweist, die bei montiertem Spiegelfuß 6 in radial angeordnete Rastnuten 32 des Aufnahmeteils 5 hintergreifend eingreifen. Das Halteelement 30 liegt mit einem ringförmigen Bodenabschnitt 33 an der im Wesentlichen ebenen Stirnseite 25 des Spiegelfußes 6 auf und ist mit diesem fest verbunden. Im Ausführungsbeispiel ist der Bodenabschnitt 33 über zwei beabstandet angeordnete, nicht näher dargestellte Schraubbefestigungen mit dem Spiegelfuß 6 verbunden. Gemäß Fig. 5 weist das Halteelement 3 sternförmig zueinander angeordnete federnde Haltezungen 31 auf. Die Rastnuten 32 sind örtlich an der Außenseite des ringförmigen Kragens 24 des Aufnahmeteiles 5 vorgesehen. Den Rastnuten 32 vorgelagert sind jeweils freigesparte Bereiche 34 am Aufnahmeteil 5 vorgesehen, damit die Haltezungen 31 des Spiegelfußes 6 in eine Vorraststellung gebracht werden können. Durch eine nachfolgende Drehung des Spiegelfußes 6 relativ zum Aufnahmeteil 5 um einen Winkel von etwa 10 bis 20° im Uhrzeigersinn erfolgt die Festlegung des Spiegelfußes 6 am Aufnahmeteil 5. Die Festlegung des Spiegelfußes 6 erfolgt prinzipiell wie der Bajonettverschluss für ein Objektiv. Der größte Teil des Spiegelfußes 6, des Aufnahmeteiles 5 und des Halteelementes 30 ist durch eine mehrteilige Abdeckung 35 verkleidet, die nach der Montage des Innenrückblickspiegels 2 am Spiegelfuß 6 befestigt ist (z.B. durch Aufstecken oder Aufklipsen).

## Patentansprüche

1. Befestigungseinrichtung (1) für einen Innenrückblickspiegel (2) von Kraftfahrzeugen an der Innenseite (3) einer Windschutzscheibe (4), wobei an der Windschutzscheibe (4) ein durch Kleben in Lage gehaltenes Aufnahmeteil (5) vorgesehen ist, an dem ein Spiegelfuß (6) des Innenrückblickspiegels (2) lösbar befestigt ist, und dass der Spiegelfuß (6) in seiner montierten Betriebsstellung (A) lediglich über eine Sechspunkt-Auflage (11) unmittelbar am Aufnahmeteil (5) abgestützt und mittels einer separaten Halteeinrichtung (12) am Aufnahmeteil (5) befestigt ist, **dadurch gekennzeichnet, dass** zur Bildung der Sechspunkt-Auflage (11) am Aufnahmeteil (5) und am Spiegelfuß (6) jeweils drei versetzt zueinander angeordnete, vorstehend ausgebildete Auflageelemente (13, 14) vorgesehen sind, wobei an den Auflageelementen (13, 14) des Spiegelfußes (6) oder des Aufnahmeteiles (5) jeweils vorstehende Prismenführungen (15) ausgebildet sind, die mit korrespondierend ausgebildeten vertieft angeordneten Aufnahmenuten (16) des jeweils anderen Teiles formschlüssig zusammenwirken und die Prismenführungen (15) die Form eines Dreikantprismas (17) aufweisen und dass die Halteeinrichtung (12) bajonettartig ausgebildet ist.

2. Befestigungseinrichtung nach Anspruch 1, **dadurch gekennzeichnet, dass** die vorstehenden Prismenführungen (15) an den Auflageelementen (14) des Spiegelfußes (6) vorgesehen sind.

3. Befestigungseinrichtung nach Anspruch 1, **dadurch gekennzeichnet, dass** die vertieft angeordneten Aufnahmenuten (16) an den Auflageelementen (13) des Aufnahmeteiles (5) ausgebildet sind.

4. Befestigungseinrichtung nach einem oder mehreren der vorangegangenen Ansprüche, **dadurch gekennzeichnet, dass** die beiden vorstehenden Seitenflächen (18, 19) der Prismenführungen (15) unter einem Winkel (α) zueinander verlaufen, wobei der Winkel (α) zwischen 60° und 120° beträgt.

5. Befestigungseinrichtung nach einem oder mehreren der vorangegangenen Ansprüche, **dadurch gekennzeichnet, dass** die jeweils drei Auflageelemente (13, 14) des Aufnahmeteils (5) bzw. des Spiegelfußes (6) jeweils etwa unter einem Winkel von 120° zueinander verlaufen.

6. Befestigungseinrichtung nach einem oder mehreren der vorangegangenen Ansprüche, **dadurch gekennzeichnet, dass** die Auflageelemente (13) des Aufnahmeteiles (5) an der der Windschutzscheibe (4) abgekehrten Seite eines bereichsweise ringförmigen Kragens (24) des Aufnahmeteiles (5) angeformt sind.

7. Befestigungseinrichtung nach einem oder mehreren der vorangegangenen Ansprüche, **dadurch gekennzeichnet, dass** die Auflageteile (14) des Spiegelfußes (6) an der dem Aufnahmeteil (5) zugekehrten Stirnseite (25) des Spiegelfußes (6) ausgebildet sind.

8. Befestigungseinrichtung nach einem oder mehreren der vorangegangenen Ansprüche, **dadurch gekennzeichnet, dass** an den Auflageteilen (13, 14) des Aufnahmeteiles (5) und des Spiegelfußes (6) den Prismenführungen (15) und den Aufnahmenuten (16) vorgelagert jeweils Einführschrägen (26, 27) vorgesehen sind.

9. Befestigungseinrichtung nach einem oder mehreren der vorangegangenen Ansprüche, **dadurch gekennzeichnet, dass** die Halteeinrichtung (12) ein mit dem Spiegelfuß (6) verbundenes Halteelement (30) umfasst, das zumindest zwei in Richtung Aufnahmeteil (5) abgestellte federnde Haltezungen (31) aufweist, die bei montiertem Spiegelfuß (6) in radial angeordnete Rastnuten (32) des Aufnahmeteils (5) eingreifen.

10. Befestigungseinrichtung nach einem oder mehreren der vorangegangenen Ansprüche, **dadurch gekennzeichnet, dass** das Halteelement (30) mit einem ringförmigen Bodenabschnitt (33) an der Stirnseite (25) des Spiegelfußes (6) aufliegt und mit diesem verbunden ist.

11. Befestigungseinrichtung nach einem oder mehreren der vorangegangenen Ansprüche, **dadurch gekennzeichnet, dass** das Halteelement (30) vorzugsweise drei sternförmig zueinander angeordnete profilierte Haltezungen (31) aufweist.

12. Befestigungseinrichtung nach einem oder mehreren der vorangegangenen Ansprüche, **dadurch gekennzeichnet, dass** die Rastnuten (32) örtlich an der Außenseite des bereichsweise ringförmig ausgebildeten Kragens (24) des Aufnahmeteiles (5) vorgesehen sind.

13. Befestigungseinrichtung nach Anspruch 12, **dadurch gekennzeichnet, dass** den Rastnuten (32) jeweils freigesparte Bereiche (34) vorgelagert sind.

## Claims

1. Fastening device (1) for an internal rear view mirror (2) of motor vehicles on the inner side (3) of a windshield (4), with a holding part (5) which is held in position by means of adhesive bonding being provided on the windshield (4), to which holding part is detachably fastened a mirror foot (6) of the internal rear view mirror (2), and with the mirror foot (6), in its mounted operating position (A), being supported directly on the holding part (5) merely by means of a six-point support (11) and being fastened to the holding part (5) by means of a separate retaining device (12), **characterized in that**, in order to form the six-point support (11), in each case three support elements (13, 14) which are arranged offset with respect to one another and which are of projecting design are provided on the holding part (5) and on the mirror foot (6), with in each case projecting prismatic guides (15) being formed on the support elements (13, 14) of the mirror foot (6) or of the holding part (5), which prismatic guides (15) interact in a form-fitting manner with correspondingly designed holding grooves (16), which are arranged so as to be recessed, of the in each case other part, and the prismatic guides (15) having the shape of a triangular prism (17), and **in that** the retaining device (12) is designed in the form of a bayonet.

2. Fastening device according to Claim 1, **characterized in that** the projecting prismatic guides (15) are provided on the support elements (14) of the mirror foot (6).

3. Fastening device according to Claim 1, **characterized in that** the holding grooves (16) which are arranged so as to be recessed are formed on the support elements (13) of the holding part (5).

4. Fastening device according to one or more of the preceding claims, **characterized in that** the two projecting side faces (18, 19) of the prismatic guides (15) run at an angle (α) with respect to one another, with the angle (α) being between 60° and 120°.

5. Fastening device according to one or more of the preceding claims, **characterized in that** the in each case three support elements (13, 14) of the holding part (5) and of the mirror foot (6) run in each case at an angle of 120° with respect to one another.

6. Fastening device according to one or more of the preceding claims, **characterized in that** the support elements (13) of the holding part (5) are integrally formed on that side of a collar (24), which is annular in regions, of the holding part (5) which faces away from the windshield (4).

7. Fastening device according to one or more of the preceding claims, **characterized in that** the support parts (14) of the mirror foot (6) are formed on that end side (25) of the mirror foot (6) which faces toward the holding part (5).

8. Fastening device according to one or more of the preceding claims, **characterized in that** insertion bevels (26, 27) are provided in each case on the support parts (13, 14) of the holding part (5) and of the mirror foot (6) in front of the prismatic guides (15) and the holding grooves (16).

9. Fastening device according to one or more of the preceding claims, **characterized in that** the retaining device (12) comprises a retaining element (30) which is connected to the mirror foot (6), which retaining element (30) has at least two resilient retaining tongues (31) which are bent in the direction of the holding part (5) and which, when the mirror foot (6) is mounted, engage into radially arranged latching grooves (32) of the holding part (5).

10. Fastening device according to one or more of the preceding claims, **characterized in that** the retaining element (30) is, with an annular base section (33), supported on and connected to the end side (25) of the mirror foot (6).

11. Fastening device according to one or more of the preceding claims, **characterized in that** the retaining element (30) preferably has three profiled retaining tongues (31) which are arranged in a stellate fashion with respect to one another.

12. Fastening device according to one or more of the preceding claims, **characterized in that** the latching grooves (32) are provided locally on the outer side of the collar (24), which is annular in regions, of the holding part (5).

13. Fastening device according to Claim 12, **characterized in that** in each case free cut-out regions (34) are provided in front of the latching grooves (32).

## Revendications

1. Dispositif de fixation (1) pour le rétroviseur intérieur (2) de véhicules automobiles sur le côté intérieur (3) d'un pare-brise (4), une partie réceptrice (5) maintenue en place par collage étant prévue au niveau du pare-brise (4), un piétement de rétroviseur (6) du rétroviseur intérieur (2) étant fixé de façon amovible au niveau de ladite partie réceptrice et le piétement de rétroviseur (6) s'appuyant seulement directement contre la partie réceptrice (5), dans sa position fonctionnelle (A) montée, via un appui à six points (11) et étant fixé à la partie réceptrice (5) à l'aide d'un dispositif de sécurité (12) séparé, **caractérisé en ce que** pour former l'appui à six points (11) contre la partie réceptrice (5) et contre le piétement de rétroviseur (6), respectivement trois éléments d'appui (13, 14) décalés les uns par rapport aux autres et réalisés de façon saillante sont prévus, des guides prismatiques (15) respectivement saillants étant réalisés au niveau des éléments d'appui (13, 14) du piétement de rétroviseur (6) ou de la partie réceptrice (5), lesdits guides interagissant par complémentarité de formes avec les encoches réceptrices (16) renfoncées de façon correspondante de l'autre partie respective et les guides prismatiques (15) prenant la forme d'un prisme à trois côtés (17) et **en ce que** le dispositif de sécurité (12) est de type à baïonnette.

2. Dispositif de fixation selon la revendication 1, **caractérisé en ce que** les guides prismatiques (15) saillants sont prévus contre les éléments d'appui (14) du piétement de rétroviseur (6).

3. Dispositif de fixation selon la revendication 1, **caractérisé en ce que** les encoches réceptrices (16) renfoncées sont réalisées au niveau des éléments d'appui (13) de la partie réceptrice (5).

4. Dispositif de fixation selon l'une quelconque des revendications précédentes ou plusieurs d'entre elles, **caractérisé en ce que** les deux surfaces latérales (18, 19) saillantes des guides prismatiques (15) forment ensemble un angle (α), l'angle (α) étant compris entre 60° et 120°.

5. Dispositif de fixation selon l'une quelconque des revendications précédentes ou plusieurs d'entre elles, **caractérisé en ce que** les respectivement trois éléments d'appui (13, 14) de la partie réceptrice (5) et/ou du piétement de rétroviseur (6) forment respectivement un angle d'environ 120°.

6. Dispositif de fixation selon l'une quelconque des revendications précédentes ou plusieurs d'entre elles, **caractérisé en ce que** les éléments d'appui (13) de la partie réceptrice (5) sont formés au niveau du côté opposé au pare-brise (4) d'un col (24) en partie en forme d'anneau de la partie réceptrice (5).

7. Dispositif de fixation selon l'une quelconque des revendications précédentes ou plusieurs d'entre elles, **caractérisé en ce que** les parties portantes (14) du piétement de rétroviseur (6) sont réalisées au niveau du côté avant (25) opposé à la partie réceptrice (5) du piétement de rétroviseur (6).

8. Dispositif de fixation selon l'une quelconque des revendications précédentes ou plusieurs d'entre elles, **caractérisé en ce que** des parties obliques de guidage (26, 27) respectivement disposées avant les guides prismatiques (15) et les encoches réceptrices (16) sont prévues au niveau des parties portantes (13, 14) de la partie réceptrice (5) et du piétement de rétroviseur (6).

9. Dispositif de fixation selon l'une quelconque des revendications précédentes ou plusieurs d'entre elles, **caractérisé en ce que** le dispositif de sécurité (12) comprend un élément de sécurité (30) relié au piétement de rétroviseur (6) qui comporte au moins deux languettes de sécurité (31) sur ressort décalées en direction de la partie réceptrice (5) qui s'emboîtent dans les encoches d'arrêt (32), disposées dans le plan radial, de la partie réceptrice (5) lorsque le piétement de rétroviseur (6) est monté.

10. Dispositif de fixation selon l'une quelconque des revendications précédentes ou plusieurs d'entre elles, **caractérisé en ce que** l'élément de sécurité (30) repose, avec une section de fond annulaire (33), contre le côté avant (25) du piétement de rétroviseur (6) et est relié à lui.

11. Dispositif de fixation selon l'une quelconque des revendications précédentes ou plusieurs d'entre elles, **caractérisé en ce que** l'élément de sécurité (30) comporte de préférence trois languettes de sécurité (31) profilées disposées en forme d'étoile les unes par rapport aux autres.

12. Dispositif de fixation selon l'une quelconque des revendications précédentes ou plusieurs d'entre elles, **caractérisé en ce que** les encoches d'arrêt (32) sont prévues localement au niveau du côté extérieur du col (24), en partie en forme d'anneau, de la partie réceptrice (5).

13. Dispositif de fixation selon la revendication 12, **caractérisé en ce que** des zones (34) respectivement évidées sont placées avant les encoches d'arrêt (32).
